# EUROPEAN PATENT SPECIFICATION

(11) **EP 1 470 863 B1**
(45) Date of publication and mention of the grant of the patent: **28.03.2007**
(21) Application number: 04001097.7
(22) Date of filing: 20.01.2004
(51) Int. Cl.: B01L 3/00, B01L 3/06, G01N 23/20, B01L 11/00

(54) **Apparatus for trapping micro-object**
Vorrichtung zur Halterung eines Mikroobjects
Dispositif de capture d'un micro-objet

(30) Priority: 21.04.2003 JP 2003116362
(43) Date of publication of application: 27.10.2004
(73) Proprietor: High Energy Accelerator Research Organization, 305-0801 Tsukuba-shi, Ibaraki (JP); National Institute of Advanced Industrial Science and Technology, Tokyo 100-8921 (JP)
(72) Inventor: Soichi, Wakatsuki, 305-0801 Tsukuba-shi Ibaraki (JP); Masahiko, Hiraki, 305-0801 Tsukuba-shi Ibaraki (JP); Minoru, Nagai, 305-0801 Tsukuba-shi Ibaraki (JP); Tamio, Tanikawa, 305-0031 Tsukuba-shi Ibaraki (JP)
(74) Representative: Krauss, Jan

(56) References cited:
- US-A1- 2003 059 849
- US-B1- 6 355 217

## Description

### Background of the Invention

### Field of the Invention

This invention relates to an apparatus for trapping a micro-object that can be utilized in the fields of biotechnology, medicine and crystal structure analysis, as well as other industrial applications requiring micro-operation.

### Description of the Related Art

Crystal structure analysis using X-ray is used widely in recent years in the acquisition of crystal structures and biochemical information of proteins, etc. Protein crystals are micro-objects of around several µm in size. When conducting an X-ray crystal structure analysis on a micro-object of such miniature scale, first crystals are formed in a droplet. Next, a formed crystal is trapped into a ribbon-like flexible ring called "loop" inside the droplet. The process of trapping a crystal into the loop is called "looping." The looped crystal is then subjected to the X-ray crystal diffraction test and the data obtained from the X-ray crystal diffraction test is analyzed.

To achieve high throughputs in the X-ray crystal structure analysis involving the series of steps described above, ways to increase the efficiency are being studied for the first step. Examples include a method to enable crystallization using a minimal amount of solution in the crystallization of macromolecules. As prior arts identified in such studies, methods and apparatuses for growing crystals have been disclosed that control the valence electrons so the electron holes in the surface or electron density can be controlled in accordance with the environment of the solution containing the target macromolecular compound as disclosed in Japanese Patent Application Laid-open No. 10-007498.

However, other steps, such as the looping process to trap a crystal into the loop, are still performed manually. The traditional looping process is explained in detail. First, a droplet with crystals formed inside is placed on the table of a microscope, etc. While observing the placed droplet through the microscope the researcher then manually inserts a loop into this droplet. The loop is formed as a ribbon-like ring made of a fiber several µm thick, for example, and is able to hold inside the ring (loop) a crystal formed in the droplet. Once a crystal in the droplet has been placed in the loop, the loop is raised to be separated from the droplet. Now, the surface tension of the solution allows the crystal to remain trapped inside the loop (the crystal is looped).

The loop containing the crystal is then dipped in a solution that becomes amorphous when frozen. The purpose of this process is to replace the solution remaining around the crystal in the loop with the solution that becomes amorphous when frozen. This process is necessary since the crystal in the loop will be inserted into liquid nitrogen to be analyzed by the X-ray crystal diffraction test. By allowing the solution around the crystal to become amorphous when frozen, the crystal is protected from breakage and negative effects on X-ray diffraction photographs can also be suppressed. After the solution replacement, the crystal in the loop is inserted into liquid nitrogen together with the loop and frozen, and the frozen sample is analyzed by the X-ray crystal diffraction test.

However, the prior art described above involves manual looping of crystals, where only the loop must be inserted into the droplet in which crystals are formed in order to trap a crystal. Since positions of crystals in the droplet are not stable, crystals may escape from the loop. Crystals may not move if the viscosity of the droplet is high, and if the viscosity is low they slip easily and make it difficult to load a crystal into the loop. In addition, the crystal often comes off of the loop as the loop containing the crystal is moved out of the droplet, which keeps the success ratio of looping fairly low. As a result, this looping process must be repeated many times until a crystal is successfully looped.

Furthermore, even after a crystal has been loaded into the loop the crystal sometimes comes off of the loop when the solution remaining around the crystal is replaced with one that becomes amorphous when frozen. Therefore, the chances of a crystal remaining loaded in the loop until the X-ray crystal diffraction test is conducted are very low. The resulting needs to repeat looping reduce the overall looping efficiency.

On the other hand, to achieve high throughputs in the crystal structure analysis of proteins, etc., it is also crucial to automate the crystal looping step to increase the operation efficiency.

### Summary of the Invention

In view of the above, the present invention aims to achieve an apparatus for trapping a micro-object that allows for a looping of micro-objects such as protein crystals in an easy, reliable and efficient manner.

To solve the problems described above, the present invention provides an apparatus for trapping a micro-object that comprises a base, a gripping mechanism for gripping a micro-object in a droplet placed in the specified location on the aforementioned base, a trapping mechanism for trapping the aforementioned micro-object gripped by the aforementioned gripping mechanism and a lifting means for separating from the aforementioned droplet the micro-object gripped by the aforementioned gripping mechanism and trapped by the aforementioned trapping mechanism.

Preferably the aforementioned trapping mechanism includes a trapping means for trapping the aforementioned micro-object, a moving means for moving the aforementioned trapping means and an installation means for installing the aforementioned trapping means on the aforementioned moving means.

Preferably the apparatus comprises a feed mechanism for placing a droplet containing micro-objects in the specified location on the aforementioned base, wherein the aforementioned trapping mechanism includes a trapping means for trapping the aforementioned micro-object, a moving means for moving the aforementioned trapping means and an installation means for installing the aforementioned trapping means on the aforementioned moving means.

It is desirable that a means for observing and displaying the trapped condition of the aforementioned micro-object be provided on the aforementioned base.

### Brief Description of the Drawings

These and other features of this invention will now be described with reference to the drawings of preferred embodiments which are intended to illustrate and not to limit the invention.
FIG. 1 is a figure that explains the basic principle of the apparatus and method provided by the present invention.
FIG. 2 is a plan view that explains an example of the apparatus and method for trapping a micro-object as provided by the present invention.
FIG. 3 is a schematic drawing showing a side view of a part of the apparatus for trapping a micro-object illustrated in FIG. 1.
FIG. 4 is an oblique view of a part of the apparatus for trapping a micro-object illustrated in FIG. 1.

Explanation of symbols used is as follows: 1, 11: Crystal; 2, 12: Droplet; 2a: Solution; 3, 13: Base; 4, 51: Gripping mechanism; 5, 81: Trapping mechanism; 6, 56: Gripping members; 7, 17: Loop; 8: Area inside the loop; 14: Crystallization tray; 14a: Concave; 31: Feed mechanism; 32: Crystallization-tray feed device; 33: Crystallization-tray transfer device; 36, 96: Joint; 34, 94: Link arm; 35, 95: Gripping part; 52: Gripping device; 53, 83: xyz stage; 53a, 83a: x stage; 53b, 83b: y stage; 53c, 83c: z stage; 56a: First finger; 56b: Second finger; 82: Trapping member; 82a: Bar-shaped member; 82b: Base; 82c: Installation part; 84: Loop transfer device; 85: Loop holder; 85a:Tip; 90: Loop feed device; 101: Lift device; 101a: Top; 101b: Lift base; 111:Microscope; 112: Display device; 113: Computer; 120: Illumination source; 130: Container.

### Detailed Description of the Preferred Embodiment

An example of embodiment of the apparatus for trapping a micro-object as provided by the present invention is explained by referring to the drawings.

The present invention provides an apparatus for trapping a micro-object of around several µm in size, such as protein crystals. First, the basic principle of the present invention is explained.

Before a protein structure can be analyzed by the X-ray diffraction test, crystals of that protein must be created. Protein crystals are usually formed in a droplet. To be specific, protein of a specified concentration is mixed into a droplet to form protein crystals (may be simply referred to as "crystals" hereinafter). The type of droplet in which crystals are formed will determine the viscosity of the droplet. Once crystals are formed, they can be trapped inside the droplet for use in the X-ray diffraction test.

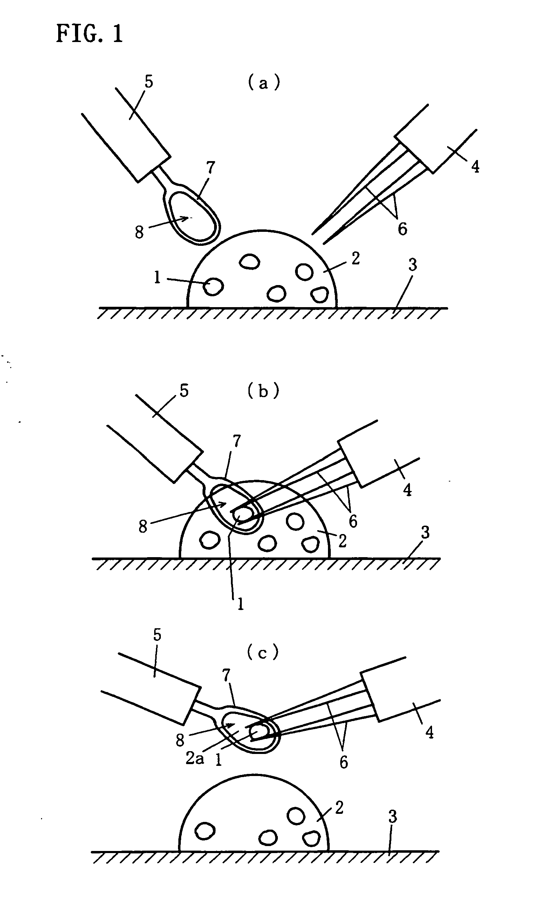

FIG. 1 explains the basic principle of an apparatus and method for trapping a micro-object as provided by the present invention. A droplet 2 containing a crystal 1 is placed in a specified location on a base 3. The droplet 2 has a specified concentration. Shown near the droplet 2 are a gripping mechanism 4 and a trapping mechanism 5 provided by the present invention (FIG. 1(a)). The gripping mechanism 4 has two thin, long gripping members 6 that resemble chopsticks, which become thinner toward the tips. The gripping members 6 move like chopsticks to grip the crystal 1. A loop 7 is installed at the tip of the trapping mechanism 5. The loop 7 is formed as a ribbon-like ring made of a fiber several µm thick, for example.

According to the present invention, the crystal 1 in the droplet 2 is trapped into the loop 7 using the gripping mechanism 4 and trapping mechanism 5. First, the gripping members 6 are inserted into the droplet 2 to grip the crystal 1. Here, "grip" also means to cause the gripping members 6 to lightly contact the crystal in a manner sandwiching the crystal. Next, the loop 7 is inserted into the droplet 2 and the crystal 1 gripped by the gripping members 6 is placed into an area 8 inside the loop (FIG. 1(b)). Since the crystal 1 is gripped by the gripping members 6, it is securely held in place inside the droplet 2, thus allowing the crystal 1 to be easily placed (trapped) into the area 8 inside the loop 7.

Next, the gripping members 6, loop 7 and crystal 1 are raised together with the crystal 1 trapped in the area 8 inside the loop 7 while still being gripped by the gripping members 6, in order to separate the crystal from the droplet 2. Since the crystal 1 is gripped by the gripping members 6, it will be held safely inside the loop 7 as it is removed from the droplet 2. In addition, the surface tension of a solution 2a remaining around the crystal 1 also helps retain the crystal 1 in the loop 7 (the crystal is looped) (FIG. 1(c)).

### (Example 1)

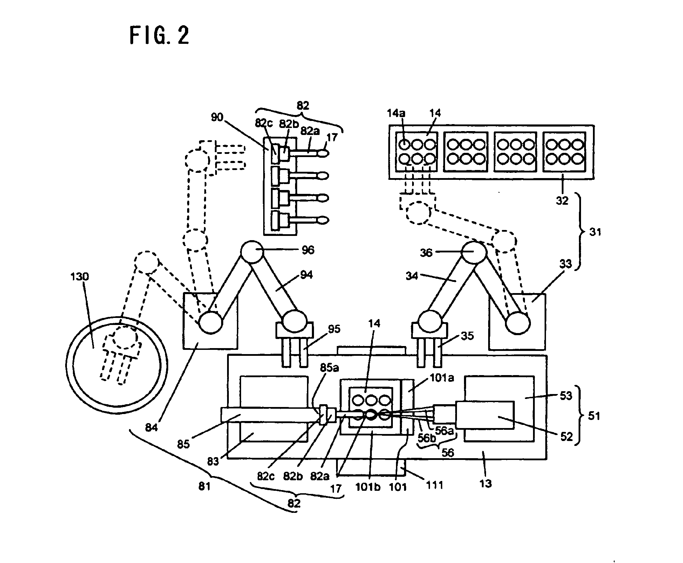

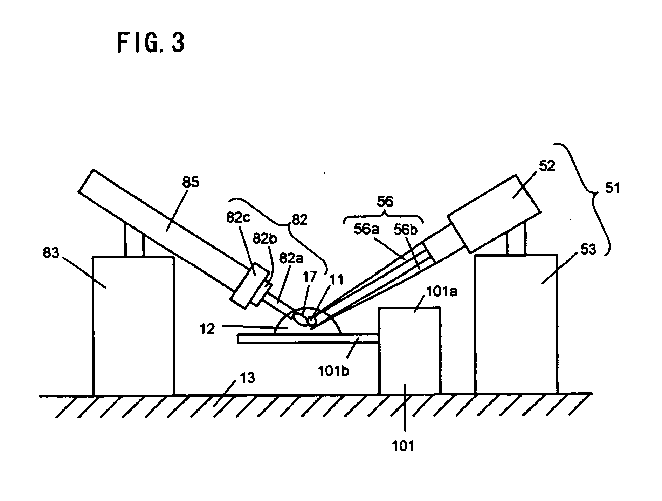

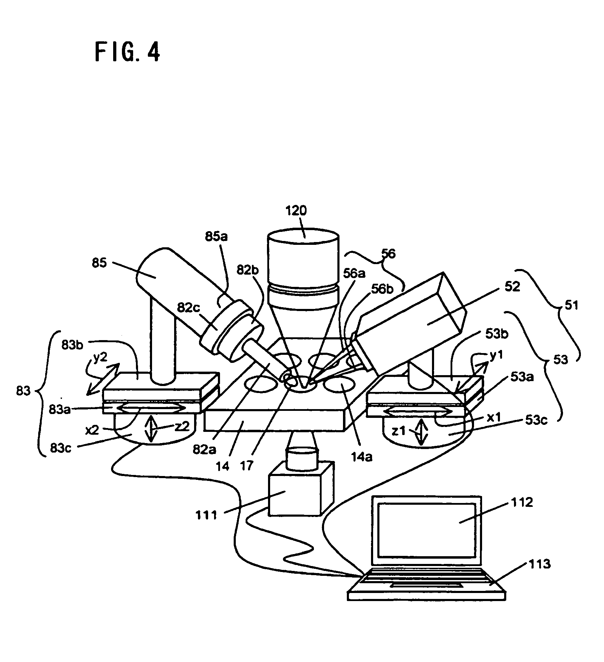

FIG. 2 gives a plan view of an example of an apparatus and method for trapping a micro-object as provided by the present invention. FIG. 3 provides a schematic drawing showing a side view of the apparatus for trapping a micro-object illustrated in FIG. 2. FIG. 4 provides a schematic drawing showing an oblique view of the apparatus for trapping a micro-object illustrated in FIG. 2. The trapping apparatus given by this example is explained by referring to FIGS. 2 through 4.

The trapping apparatus given by this example consists of a base 13, a feed mechanism 31 for placing, in the specified location on the base 13, a crystallization tray 14 carrying a droplet 12 in which a crystal 11 of protein, etc., is formed, a gripping mechanism 51 for gripping the crystal 11 in the droplet 12 on the crystallization tray 14 placed in the specified location, a trapping mechanism 81 for trapping the crystal 11, a lift device 101 that provides a lifting means for separating the trapped crystal 11 from the droplet 12, and a microscope 111 and display device 112 that provide a means for observing and displaying the trapped condition of the crystal 11.

The feed mechanism 31 consists of a crystallization-tray feed device 32 and a crystallization-tray transfer device 33. The crystallization-tray feed device 32 has a plurality of crystallization trays 14 containing crystals 11. Crystals 11 are preformed in the droplets 12 placed in a plurality of concaves 14a provided in each crystallization tray 14.

The crystallization-tray transfer device 33 has a link arm 34 with a joint 36. (The dotted lines in FIG. 2 show a rotational movement of the link arm 34.) In addition, a gripping part 35 is provided at the tip of the link arm 34. The crystallization-tray transfer device 33 uses the gripping part 35 to grip a crystallization tray 14 from among the trays arranged on the crystallization-tray feed device 32, moves it via the link arm 34 and places it in the specified location on the base 13.

The lift device 101 is provided near the center of the base 13. The lift device 101 is extendable/contractible using a hydraulic mechanism, for example, and its top 101a is movable upward and downward (in the z direction). The lift device 101 is equipped with a cantilever lift base 101b, and this lift base 101b also moves up and down together with the top 101a. A hole (not shown) is provided in the base 13 where the lift base 101b is located, so the crystallization tray 14 placed on the lift base 101b can be observed from below the base 13 using the microscope 111 explained later. In this example, this lift base 101b provides the specified location on the base 13 where a crystallization tray 14 is placed.

FIGS. 2 through 4 illustrate conditions in which a crystallization tray 14 is placed on the lift base 101b. In FIG. 3, however, the crystallization tray 14 is omitted and only the trapping target, namely a droplet 12 and a crystal 11 in the droplet 12, is shown.

The gripping mechanism 51 that grips a crystal 11 is provided on the base 13. The gripping mechanism 51 consists of an xyz stage 53 and a gripping device 52 installed on the xyz stage 53. The xyz stage 53 provides a means for moving the gripping device 52 and consists of an x stage 53a, a y stage 53b and a z stage 53c. The z stage 53c is extendable/contractible using a hydraulic mechanism, for example, and the top of the z stage 53c is movable upward and downward (in the z direction as shown by arrow z1 in FIG. 4). The x stage 53a is provided on top of the z stage 53c and is movable in the x direction (the direction shown by arrow x1 in FIG. 4) using a linear bearing, etc. The y stage 53b is provided on the x stage 53a and is movable in the y direction (the direction perpendicular to the x and z directions as shown by arrow y1 in FIG. 4) using a linear bearing, etc.

The gripping device 52 has gripping members 56 consisting of two thin, long fingers that resemble chopsticks (a first finger 56a and a second finger 56b). The gripping device 52 is equipped with upper and lower parallel mechanisms that drive the first finger 56a and second finger 56b, respectively (both mechanisms are not shown). The upper parallel mechanism mainly generates fine relative motions, while the lower parallel mechanism is chiefly used to perform positioning in a wide work space. The fine relative motions of the first finger 56a and second finger 56b make it easy to handle the target. This gripping device 52 is embodied by publicly known art (such as the one described in Patent Gazette of Patent No. 2560262).

Using the gripping mechanism 51 described above, the gripping members 56 of the gripping device 52 are moved via the xyz stage 53 to the position of the crystallization tray 14 that has been placed on the lift base 101b, and then the gripping members 56 are used to grip a crystal 11 in the droplet 12 on the crystallization tray 14.

The trapping mechanism 81 for trapping a crystal 11 consists of a trapping member 82 that provides a means for trapping a crystal 11, an xyz stage 83 that provides a moving means and a loop transfer device 84 that provides an installation means. The trapping member 82 has a base 82b on a bar-shaped member 82a, with an installation part 82c provided below the base 82b and a loop 17 provided at the tip of the trapping member 82. The loop 17 is formed as a ribbon-like flexible ring made of rayon or similar material. The entire trapping member 82 is sometimes referred to as a loop, but in this specification a loop 17 refers to the ribbon-like ring part. This loop 17 is inserted into the droplet 12 on the crystallization tray 14, and the crystal 11 gripped in the droplet 12 by the gripping members 56 is placed inside the ring of the loop 17 to be trapped.

The xyz stage 83 provides a means for moving the trapping member 82, and just like the xyz stage 53 this stage also consists of an x stage 83a, a y stage 83b and a z stage 83c. Here, too, the z stage 83c is extendable/contractible using a hydraulic mechanism, etc., and its top is movable in the z direction (the direction shown by arrow z2 in FIG. 4). The x stage 83a provided on top of the z stage 83c is movable in the x direction (the direction shown by arrow x2 in FIG. 4) using a linear bearing, etc. The y stage 83b provided on the x stage 83a is movable in the y direction (the direction shown by arrow y2 in FIG. 4) using a linear bearing, etc.

The xyz stage 83 has a loop holder 85 that holds the installed trapping member 82. Specifically, the trapping member 82 is held in the loop holder 85 as its installation part 82c is installed to the tip 85a of this loop holder 85.

When looping a crystal 11, the xyz stage 83 is moved to place (trap) the crystal 11 in the droplet 12 into the loop 17 installed at the tip of the trapping member 82. Therefore, the xyz stage 83 should have a sufficient positioning accuracy required to trap a crystal 11 in the droplet 12 using the trapping member 82.

The loop transfer device 84 provides an installation means for transferring a trapping member 82 placed on the loop feed device 90 to the position of the xyz stage 83 and then installing it to the loop holder 85 on the xyz stage 83. The loop feed device 90 has a plurality of trapping members 82 placed on it, each having a loop 17 of a different size.

Just like the crystallization-tray transfer device 33 mentioned earlier, the loop transfer device 84 also has a link arm 94 with a joint 96. (The dotted lines in FIG. 2 show a rotational movement of the link arm 94.) A gripping part 95 is provided at the tip of the link arm 94. The loop transfer device 84 uses the gripping part 95 to pick up, from the loop feed device 90, a trapping member 82 having a loop 17 of an appropriate size suitable for the target crystal 11, and then turns the link arm 94 to transfer the trapping member 82 to the position of the xyz stage 83 and installs it to the tip 85a of the loop holder 85.

This operation of the loop transfer device 84 is less precise than the aforementioned operation of the xyz stage 83 and therefore does not require a level of positioning accuracy needed to place a crystal 11 in the droplet 12 into the ring of the loop 17. This is because all that is required of the loop transfer device 84 is to swiftly install a trapping member 82 to the loop holder 85 on the xyz stage 83.

By operating the loop transfer device 84 and xyz stage 83 together, a crystal 11 can be swiftly and accurately looped. This improves the looping efficiency.

If the positioning accuracy of the loop transfer device 84 itself is raised to a level equivalent to that of the xyz stage 83, it will become possible to directly trap a crystal 11 in the droplet 12 using the trapping member 82 gripped by the loop transfer device 84. In this case, the xyz stage 83 is no longer necessary and the trapping mechanism will consist only of the loop transfer device 84 providing an installation means and the trapping member 82 providing a trapping means.

A container 130 filled with liquid nitrogen is placed near the loop transfer device 84. This container 130 is used when the trapping member 82, which already has a crystal 11 loaded inside the loop 17, is gripped and transferred again by the loop transfer device 84 to be dipped together with the loop 17 into the liquid nitrogen inside the container 130 in order to freeze the crystal 11.

A microscope 111 and a display device 112 are provided below the base 13. The microscope 111 and display device 112 provide a means for observing and displaying the trapped condition of a crystal 11 inside the loop 17. The microscope 111 is connected to an imaging element such as a CCD, so the trapped condition of the crystal 11 can be captured from below the droplet 12, for example, and displayed on the display device 112 of a computer 113. It is also possible for the researcher to directly observe crystals 11 or trapped condition of a crystal 11 by looking into the microscope 111.

As shown in FIG. 3, a droplet 12 being observed has a dome-shaped surface due to the surface tension, but the droplet 12 on the crystallization tray 14 (not shown in FIG. 3) has a flat bottom. Therefore, observing the trapped condition of a crystal 11 from below the droplet 12 eliminates the effect of surface tension and allows for an accurate observation of undistorted image.

In this example, the lift base 101b and crystallization tray 14 are formed by transparent members to allow the trapped condition of a crystal 11 to be observed/displayed from below the droplet 12. In addition, as mentioned earlier the hole provided in the base 13 where the lift base 101b is positioned allows for an observation of the droplet 12 from below the base 13.

An illumination source 120 is provided above the base 13, so the work area around the crystallization tray 14 can be illuminated for enhanced visibility as a crystal 11 is trapped with the gripping device 52 and trapping member 82.

At least the aforementioned gripping mechanism 51, trapping mechanism 81, lift device 101 and microscope 111 are connected to a computer 113, so the timings of trapping and observing/displaying a crystal 11 can be controlled.

In this example, the lift device 101 is movable only in the z direction, but it can also be configured with xyz moving capabilities just like the xyz stages 53 and 83. In this case, the target crystal 11 can be easily brought into the field of view of the microscope 111 on the crystallization tray 14 by moving the lift device 101.

### (Operation)

Next, the operation of the trapping apparatus given by this example is explained. From the crystallization-tray feed device 32 on which a plurality of crystallization trays 14 are placed, each holding droplets 12 containing crystals 11, the target crystallization tray 14 to perform looping on is transferred onto the lift base 101b via the crystallization-tray transfer device 34 (first step).

Then, the researcher uses the microscope 111 to observe a crystal 11 in the placed crystallization tray 14 and determines the size of the crystal 11 and selects a loop 17 of an appropriate size suitable for the crystal 11. Although the researcher determines the size of the loop 17 by observing the target crystal 11 in this example, it is also possible to use the computer 113 to automatically determine the size of the crystal 11 observed by the microscope 111 and select an appropriate size of the loop 17.

Next, the xyz stage 53 of the gripping mechanism 51 is used to move the gripping device 52 over the placed crystallization tray 14, and a crystal in the droplet 12 on the crystallization tray 14 is gripped using the gripping members 56 (second step). When the crystal 11 is gripped, it need not be gripped firmly with the gripping members 56. It suffices for the gripping members 56 to only lightly contact the crystal 11 in a manner sandwiching the crystal.

In the meantime, from among the plurality of trapping members 82 placed on the loop feed device 90 one having the loop 17 selected in accordance with the size of the crystal 11 is gripped and transferred by the loop transfer device 84 to be installed to the loop holder 85 on the xyz stage 83. Thereafter, the xyz stage 83 is moved until the crystal 11 gripped by the gripping members 56 is placed (trapped) inside the ring of the loop 17 on the trapping member 82 (third step). Since the crystal 11 is gripped by the gripping members 56, its position in the droplet 12 is fixed. Therefore, the crystal 11 can be easily trapped into the loop 17.

With the crystal 11 in the droplet 12 gripped by the gripping members 56 and trapped inside the loop 17, the lift device 101 is moved downward to lower the lift base 101b. Alternatively, the gripping members 56 may be removed from the crystal 11 in the droplet 12 being trapped inside the loop 17, and then the lift base 101b is lowered with the crystal 11 trapped inside the loop 17.

As explained above, lowering the lift base 101b will move the droplet 12 downward together with the crystallization tray 14 placed on the lift device 101b. As a result, the crystal 11 will be separated from the droplet 12 (fourth step). The crystal 11 inside the loop 17 (trapped inside the ring of the loop 17) is held in place because of the surface tension of the droplet remaining around the crystal 11. This completes the looping of the crystal 11.

By using the lift device 101, the crystal 11 can be separated from the droplet 12 using a simple operation of lowering the lift device 101, without moving the trapping member 82 and gripping device 52 holding the crystal 11.

When separating the loop 17 holding the crystal 11 from the droplet 12 by lowering the lift base 101b, the crystal 11 in the droplet 12 need not be positioned on the upper side of the loop 17, and it may be positioned on the lower side the loop 17. This is because the crystal 11 will remain in place inside the loop 17 by the surface tension of the droplet 12 as it is separated from the droplet 12.

In this example, the droplet 12 is moved downward by lowering the lift base 101b to separate the crystal 11 in the loop 17 from the droplet 12. It is also possible to use the xyz stages 53 and 83 to move upward the trapping member 82 and gripping members 56 holding the crystal 11 inside the loop 17, thereby separating the crystal 11 from the droplet 12 without moving the lift base 101b.

At least the second step through the fourth step as explained above, namely the conditions of gripping a crystal 11 on the placed crystallization tray 14 and of looping/trapping the crystal 11, can be observed via the microscope 111 provided below the base 13 from, for example, below the droplet 12 containing the crystal 11. In addition, the image captured by an imaging element such as a CCD can be displayed on the display device 112 of the computer 113.

In this example, the trapped condition of the crystal 11 in the loop is observed from below the droplet 12. However, the observation of the crystal 11 is not limited to downward direction and the trapped condition of the crystal 11 can be observed, for example, from above the droplet 12.

Also, the microscope 111 and display device 112 are provided here as a means for observing and displaying the trapped condition of the crystal 11. However, it is possible to use only the microscope 111 without providing any display device 112.

In the above example, automating the looping of a crystal 11 will enable efficient looping. It will also allow for an easy, reliable loading of a crystal 11 into the loop 17, thereby increasing the success ratio of looping.

The above explained, using an example, an embodiment of the apparatus for trapping a micro-object as provided by the present invention. It goes without saying that the present invention is not limited to this specific example, but only by the scope of the claims.

By using the apparatus for trapping a micro-object having the aforementioned structure as provided by the present invention, micro-objects such as protein crystals can be looped easily, reliably and efficiently, thereby increasing the throughputs of protein crystal analysis.

## Claims

1. An apparatus for trapping a micro-object, comprising:
a base (3,13);
a gripping mechanism (4,51) for gripping a micro-object (1) in a droplet (2) placed in a predetermined location on said base;
a trapping mechanism (5,81) for trapping the micro-object gripped by said gripping mechanism; and
a lifting means (101) on said base for separating from the droplet the micro-object gripped by said gripping mechanism and trapped by said trapping mechanism;

2. The apparatus as recited in Claim 1, further comprising a means on said base for observing and displaying the trapped condition of the micro-object.

3. The apparatus as recited in Claim 1, wherein said trapping mechanism includes a trapping means for trapping the micro-object, a moving means for moving said trapping means and an installation means for installing said trapping means on said moving means.

4. The apparatus as recited in Claim 3, further comprising a means on said base for observing and displaying the trapped condition of the micro-object.

5. The apparatus as recited in Claim 1, further comprising:
a feed mechanism for placing a droplet containing micro-objects in a predetermined location on said base;
wherein said trapping mechanism includes a trapping means for trapping the micro-object, a moving means for moving said trapping means and an installation means for installing said trapping means on said moving means.

6. The apparatus as recited in Claim 5, further comprising a means on said base for observing and displaying the trapped condition of the micro-object.

## Patentansprüche

1. Vorrichtung zum Erfassen eines Mikroobjekts, umfassend:
eine Basis (3, 13),
einen Greifmechanismus (4, 51) zum Greifen eines Mikroobjekts (1) in einem Tröpfchen (2), das an einem vorbestimmten Ort auf der Basis plaziert ist;
einen Erfassungsmechanismus (5, 81) zum Erfassen des durch den Greifmechanismus gegriffenen Mikroobjekts; und
ein Hebemittel (101) auf der Basis zum Abtrennen des von dem Erfassungsmechanismus gegriffenen und durch den Erfassungsmechanismus erfassten Mikroobjekts von dem Tröpfchen.

2. Vorrichtung nach Anspruch 1, weiter umfassend ein Mittel zum Beobachten und Anzeigen des erfassten Zustands des Mikroobjekts auf der Basis.

3. Vorrichtung nach Anspruch 1, wobei der Erfassungsmechanismus ein Erfassungsmittel zum Erfassen des Mikroobjekts, ein Bewegungsmittel zum Bewegen der Erfassungsmittel und ein Installationsmittel zum Installieren des Erfassungsmittels auf den Bewegungsmitteln einschließt.

4. Vorrichtung nach Anspruch 3, weiter umfassend ein Mittel zum Beobachten und Anzeigen des erfassten Zustands des Mikroobjekts auf der Basis.

5. Vorrichtung nach Anspruch 1, weiter umfassend:
einen Zuführungsmechanismus zum Plazieren eines Tröpfchens enthaltend Mikroobjekte an einem vorbestimmten Ort auf der Basis;
wobei der Erfassungsmechanismus ein Erfassungsmittel zum Erfassen des Mikroobjekts, ein Bewegungsmittel zum Bewegen der Erfassungsmittel und ein Installationsmittel zum Installieren des Erfassungsmittels auf den Bewegungsmitteln einschließt.

6. Vorrichtung nach Anspruch 5, weiter umfassend ein Mittel zum Beobachten und Anzeigen des erfassten Zustands des Mikroobjekts auf der Basis.

## Revendications

1. Appareil pour retenir un micro-objet, comprenant :
une base (3, 13),
un mécanisme de préhension (4, 51) destiné à saisir un micro-objet (1) dans une gouttelette (2) déposée à un emplacement prédéterminé sur ladite base,
un mécanisme de rétention (5, 8 1) destiné à retenir le micro-objet saisi par ledit mécanisme de préhension, et
un moyen de levage (101) sur ladite base pour séparer de la gouttelette le micro-objet saisi par ledit mécanisme de préhension et retenu par ledit mécanisme de rétention:

2. Appareil selon la revendication 1, comprenant en outre sur ladite base un moyen pour observer et visualiser l'état retenu du micro-objet.

3. Appareil selon la revendication 1, dans lequel ledit mécanisme de rétention comprend un moyen de rétention pour retenir le micro-objet, un moyen de déplacement pour déplacer ledit moyen de rétention et un moyen d'installation pour installer ledit moyen de rétention sur ledit moyen de déplacement.

4. Appareil selon la revendication 3, comprenant en outre sur ladite base un moyen pour observer et visualiser l'état retenu du micro-objet.

5. Appareil selon la revendication 1, comprenant en outre :
un mécanisme d'alimentation destiné à déposer une gouttelette contenant des micro-objets dans un emplacement prédéterminé de ladite base,
dans lequel ledit mécanisme de rétention comprend un moyen de rétention pour retenir le micro-objet, un moyen de déplacement pour déplacer ledit moyen de rétention et un moyen d'installation pour installer ledit moyen de rétention sur ledit moyen de déplacement.

6. Appareil selon la revendication 5, comprenant en outre sur ladite base un moyen pour observer et visualiser l'état retenu du micro-objet.
